# EUROPEAN PATENT APPLICATION

(11) **EP 0 715 096 A1**
(43) Date of publication of application: **05.06.1996**
(21) Application number: 95203217.5
(22) Date of filing: 23.11.1995
(51) Int. Cl.: F16H 57/02

(54) **Tractor transmission shift fork assembly**

(30) Priority: 01.12.1994 US 352194
(71) Applicant: NEW HOLLAND U.K. LIMITED, Basildon, Essex SS14 3AD (GB)
(72) Inventor: Schott, Allan N., Warren, MB, R0C 3E0 (CA)
(74) Representative: Vandenbroucke, Alberic

(57) **Abstract**

A shift fork assembly (40) for a tractor transmission (20) is disclosed wherein the shift fork assembly (40) is mounted directly to the transmission cover (26) to be removable therewith. The shift fork assembly (40) includes shift forks (45) mounted directly to the shift rails (42, 43) for movement therewith, the shift rail detent mechanism (41) and the shift fork position adjustment mechanism (50), and is removable from the transmission housing (25) as a unit to facilitate the servicing thereof at a location remote from the transmission housing (25). The transmission cover (26) onto which the shift fork assembly (40) is mounted is also provided with a secondary cover (27) to permit access to the shift fork position adjustment mechanism (50) to allow positional adjustment of the shift forks (45) relative to both the corresponding shift rail (42, 43) and the corresponding shift collar (33) engageable by the shift forks (45).

## Description

This invention relates generally to off-road motor vehicles, such as tractors, and more particularly, to a transmission having shift fork assemblies engageable with slidable shift collars associated with synchronizers to effect a shifting from one gear to another.

Tractor transmissions typically utilize at least two gear shifting assemblies to provide several ranges of gear selections and a plurality of individual gear selections within each range. The shifting of gears to make a selection of ranges or gears within the selected range normally involves the sliding movement of a shift fork on a shift rail to effect the corresponding sliding movement of a shift collar.

The mounting of the shift fork assembly within the transmission requires a positional adjustment of the shift fork relative to the corresponding gear or synchronizer so that proper positional relationships therebetween can be attained and maintained. The servicing of shift fork assemblies is also a concern as shift forks require disassembly and replacement on a periodic basis. The losing of small parts, such as are found in the detents used for holding the shift forks in a selected position, within the transmission is completely unacceptable as such parts can find their way between intermeshing gears to damage expensive transmission components.

Accordingly, it would be desirable to provide a shift fork assembly that would be both self-contained, to enable the servicing of the shift fork assembly outside of the transmission casing, and conveniently adjustable to properly position the shift forks relative to the corresponding shift collar with which the shift fork is operatively engaged.

It is therefore an object of this invention to overcome the aforementioned disadvantages of the prior art by providing a self-contained, adjustable shift fork assembly for a tractor transmission.

According to a first aspect of the present invention, a tractor is provided comprising :
- a chassis supported above the ground by wheels, including drive wheels to provide operative power for movement of said chassis over the ground;
- an engine mounted on said chassis to provide operative power; and
- a transmission operatively interconnecting said drive wheels and said engine to provide varying speeds of operation of said drive wheels for a given speed of operation of said engine, said transmission having a housing including a removable cover to provide access to the interior of said housing, a plurality of gears rotatably supported within said housing and a shift fork assembly mounted within said housing to effect a selectable shifting of said gears for interengagement therebetween in a predefined manner to provide said different speeds of operation of said drive wheels connected thereto.

The tractor is characterized in that said shift fork assembly is mounted on said transmission cover to be removable therewith as a unit with said transmission cover.

According to a second aspect of the present invention, a transmission is provided comprising :
- a housing defining a hollow shell including at least one opening therein to provide access into the interior of said housing, said housing rotatably mounting an input shaft and an output shaft;
- a transmission cover removably mounted on said housing to cover said at least one opening;
- a plurality of gears rotatably mounted within said housing and being operatively connected to said input and output shafts, at least one of said gears having a shiftable component to permit the selective engagement between selected pairs of said gears to effect differing speeds of rotation of said output shaft for a given speed of rotation of said input shaft; and
- a shift fork assembly mounted within said housing to effect a selectable shifting of said shiftable component.

The transmission is characterized in that said shift fork assembly is mounted to said transmission cover to be removable from said housing as a unit therewith.

As a result, the shift fork assembly can be removed from the transmission which facilitates servicing at a location remote from the transmission housing.

Advantageously, the transmission cover to which the shift fork assembly is mounted is provided with a secondary access cover to permit adjustment of the shift forks relative to the corresponding shift collars. As such, the adjustment of the shift forks to assure proper engagement with the corresponding shift collars can be made with the shift fork assembly mounted to the transmission housing.

A tractor transmission in accordance with the present invention will now be described in greater detail, by way of example, with reference to the accompanying drawings, in which :
Figure 1 is a side elevational view of a tractor incorporating the principles of the instant invention, a portion of the tractor being broken away to better show the transmission and the controls for effecting a shifting of the transmission;
Figure 2 is an enlarged partial cross-sectional view of the transmission taken along lines 2 - 2 of Figure 1, looking downwardly into the top of the transmission;
Figure 3 is a partial cross-sectional view of the transmission taken along lines 3 - 3 of Figure 2 to depict an elevational view of the upper part of the transmission, the movement of the secondary cover relative to the primary cover being shown in phantom; and
Figure 4 is a cross-sectional detail view of the upper shift rail and attached shift fork, a portion of the shift rail being broken away to better depict the adjustment mechanism for adjusting the position of the shift fork relative to the corresponding shift rail.

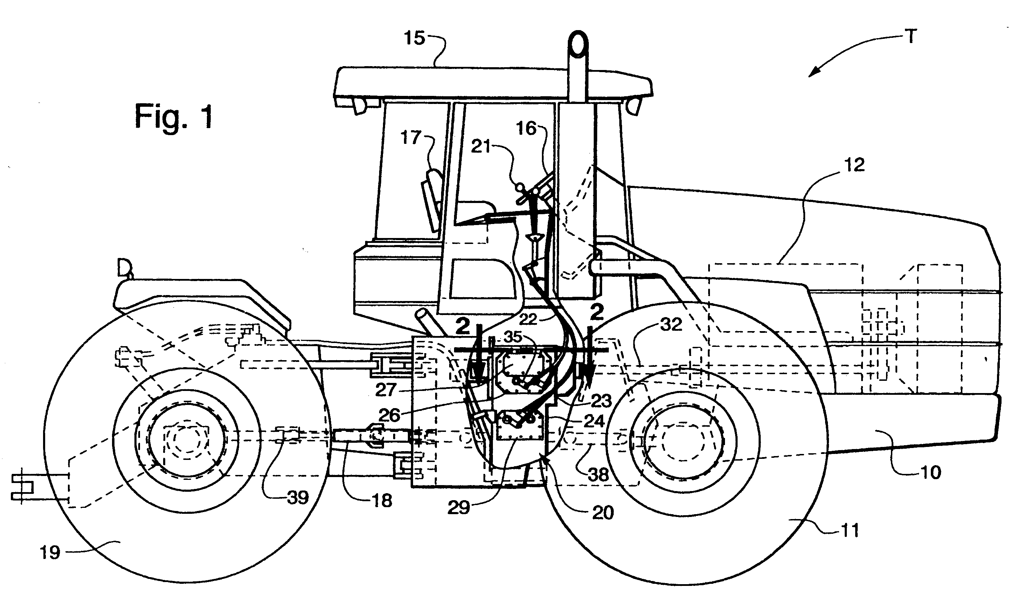

Referring now to the drawings and, particularly, to Figure 1, a representative view of an agricultural tractor incorporating the principles of the instant invention can best be seen. Left and right references are used as a matter of convenience and are determined by standing at the rear of the tractor and facing the forward end in the normal direction of travel. The tractor chassis 10 is supported above the ground in a conventional manner by front wheels 11, which on large tractors are typically drivingly powered, and rearward drive wheels 19 rotatably mounted in a customary transversely spaced orientation.

The chassis supports a conventional engine 12 serving to provide operational power for the tractor T and an operator's cab 15 positioned in an elevated location. The operator's cab 15 includes a steering wheel 16, positioned forwardly of the conventional operator's seat 17, to operate the steering of the front wheels 11 through manipulation of the hydraulic cylinder 18 controlling the articulation of the tractor chassis 10 in a known conventional manner. The operator's cab 15 is also provided with conventional operative controls, such as the transmission control lever 21, to permit the operative control of the tractor T.

The tractor T is provided with a transmission 20 supported on the chassis 10 to receive rotational power from the engine 12 and transfer rotational power to the front and rear wheels 11, 19 at selected speeds of operation. The transmission control lever 21, which is mounted in the operator's cab 15 within normal reach of the operator's seat 17, effects a shifting of the available speeds of operation through a push/pull cable 22, as will be described in greater detail below. The transmission 20 is divided between an upper part 23, housing a set of first gears 31 for providing various speeds of operation for a given input rotational speed from the engine 12, and a lower part 24, providing a set of second gears 36 operatively engaged with the set of first gears 31 to provide a plurality of ranges of speeds of operation through which each of the speeds of operation are operable.

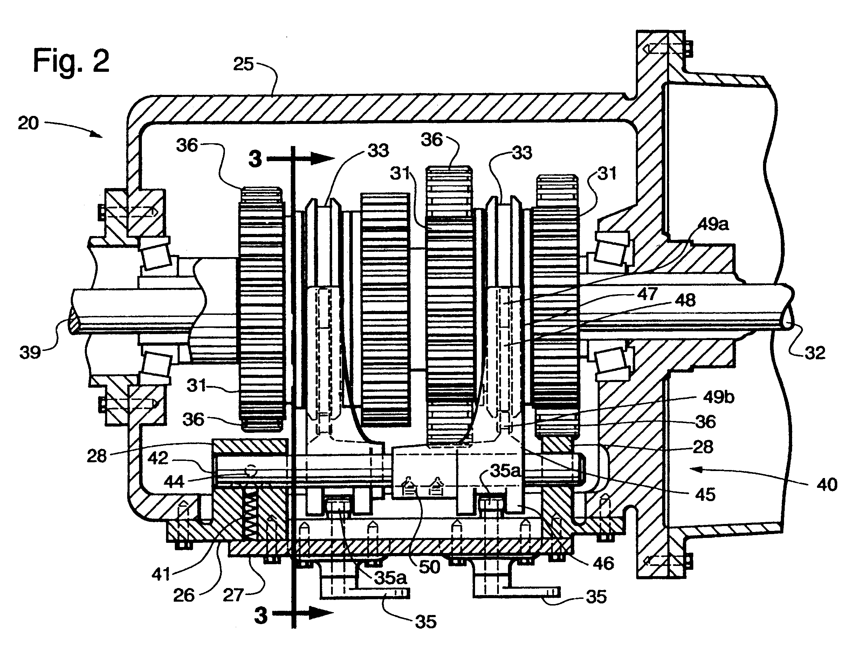

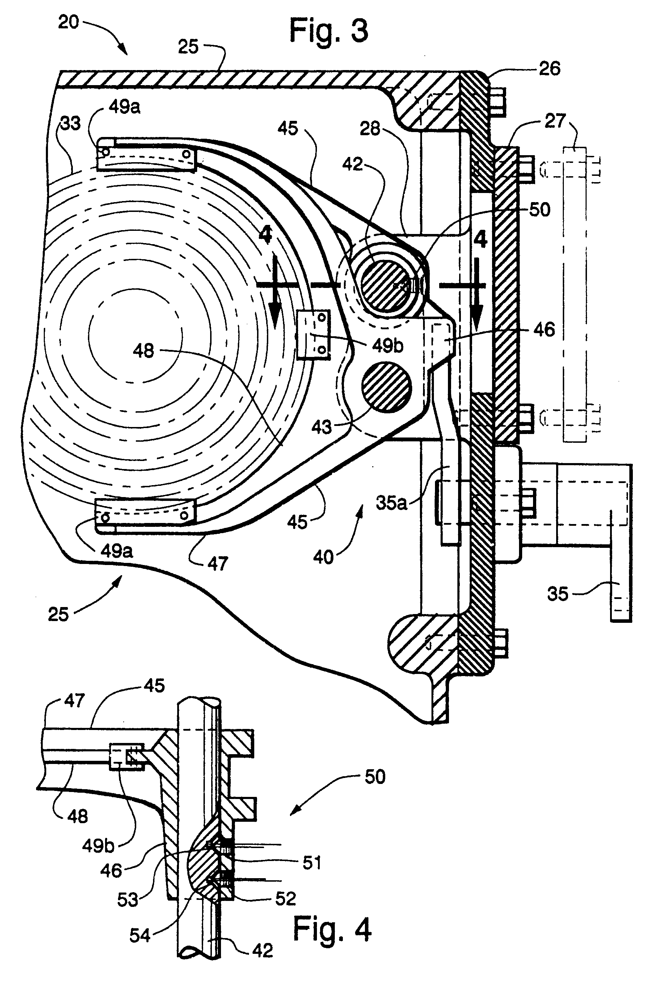

Referring now to Figures 2 and 3, the details of the transmission 20 can best be seen. The upper part 23 of the transmission 20 is provided with a set of four first gears 31 rotatably mounted on a shaft 32 receiving operative rotational power from the engine 12. Between each of the arranged pairs of the set of first gears 31 is positioned a laterally shiftable synchronizer 33 drivingly engaged with the shaft 32. Each synchronizer 33 is laterally positionable in one of three positions, a central neutral position and left and right engagement positions for engaging a corresponding one of the adjacent arranged pairs of the set of first gears 31.

The transmission control lever 21 is arranged in a conventional "H" pattern with the lever being positionable in one of the four legs of the standard "H" pattern to correspond to one of the four first gears 31. Accordingly, the control lever 21 is operable to effect a lateral shifting of one of the synchronizers 33 at a time to one of the engagement positions with the non-shifting synchronizer being positioned in its corresponding neutral position. As a result, only a selected one of the set of four first gears 31 can be drivingly engaged with the power input shaft 32 at a time to provide a selected speed of operation.

Each of the first gears 31 is engaged through a conventional power transfer apparatus (not shown) housed within the transmission 20 between the upper and lower parts 23, 24 to transfer rotational power to the set of four second gears 36 which are arranged in a similar configuration as the set of four first gears 31 in the upper part 23 of the transmission 20 and are selectably engageable through synchronizers (not shown) to select a range of output speeds to the output shaft 39 to deliver operative rotational power to the front wheels 11 and to the output shaft 39 to deliver operative rotational power to the rear wheels 19.

The transmission housing 25 is provided with an upper primary cover 26 detachably mounted to the housing 25 to provide access to the upper part 23 of the transmission 20 for service, repair and adjustment thereof, and a lower primary cover 29 detachably mounted to the housing 25 to provide access to the lower part 24 of the transmission 20. The upper primary cover 26 is also provided with a secondary cover 27 detachably mounted to the upper primary cover 26 to provide access to the shift fork assembly 40 in the upper part 23 of the transmission 20. All of the covers 26, 27 and 29 are sealed against, respectively, the housing 25 and the upper primary cover 26 to prevent the leakage of lubrication fluids from within the transmission 20.

The shift fork assembly 40 in the upper part 23 of the transmission 20 includes a pair of shift forks 45, each of which is mounted on a corresponding upper and lower shift rail 42, 43 and is engaged with a corresponding synchronizer 33. Each shift fork 45 is formed with a base portion 46, having a bore extending transversely therethrough for the passage of the corresponding shift rail 42, 43 on which the shift fork 45 is mounted, and an integral, U-shaped fork portion 47 extending outwardly from the base portion 46 to opposingly engage the corresponding synchronizer 33. The fork portion 47 is formed with a central web portion 48 to which is mounted first and second opposing wear pads 49a and a third central wear pad 49b for engagement of the synchronizer 33.

Referring now to the detail view of Figure 4, the base portion 46 of each shift fork 45 is fixed to the corresponding shift rail 42, 43 by an adjustment mechanism 50 consisting of a pair of set screws 51, 52 threadably received within the base portion and engageable within detents 53, 54 formed within the shift rail 42, 43. The transverse spacing between the detents 53, 54 is greater than the spacing between the set screws 51, 52 so that the base portion 46 can be fixed to the shift rail 42, 43 to prevent any relative sliding movement therebetween; however, the engagement of the set screws 51, 52 with the sloped sides of the detents 53, 54 allows the base portion 46, and therefore the entire shift fork 45, to be moved a small distance along the shift rail to allow for a positional adjustment of the shift fork 45 relative to the synchronizer 33.

Returning to the views of Figures 2 and 3, the shift fork assembly 40 is supported from the upper primary cover 26. The upper and lower shift rails 42, 43 are slidably received within mounting members 28 formed as an integral part of the upper primary cover 26 and extending inwardly therefrom into the interior of the transmission housing 25. Accordingly, the removal of the upper primary cover 26 from the transmission housing 25 includes the removal of the shift fork assembly 40 from the transmission 20. Access to the adjustment mechanism 50 can be had through the secondary cover 27 without requiring the removal of the larger upper primary cover 26 from the housing 25. The shift fork assembly 40 further includes a conventional spring-loaded ball detent mechanism 41 interacting independently with each of the upper and lower shift rails 42, 43 to restrain the shift rails 42, 43 in the position in which they have been respectively moved. A conventional shift rail interlock 44 interacts between the upper and lower shift rails 42, 43 to prevent one shift rail from moving out of the neutral position whenever the other shift rail is already out of the neutral position. The interlock 44 is in the form of a generally vertically oriented pin transversely fixed within the mounting portion 28 that is vertically movable to be positionable within a recess formed in the opposing shift rail whenever the other shift rail is moved out of the neutral position. Accordingly, the opposing shift rail cannot be moved out of the neutral position until the other shift rail has returned to the neutral position to allow the recess formed therein to align with the pin to accept the vertical movement thereof when the opposing shift rail is moved out of the neutral position.

As is best seen in Figures 1 - 3, the shifting of the transmission 20 is accomplished by the manipulation of the control lever 21 in the operator's cab 15 to effect a movement of the corresponding push/pull cable 22 connected to the shift lever 35 pivotally mounted on the exterior side of the primary cover 26 to effect a pivotal movement thereof in a conventional manner. The pivotal movement of the shift lever 35 results in a transverse movement of the corresponding shift arm 35a on the interior side of the primary cover 26. The resultant movement is a transverse shifting of the corresponding shift fork 45 to move the engaged synchronizer 33.

The servicing of the shift fork assembly 40 is enhanced by the mounting of the assembly 40 on the upper primary cover 26. Whenever the upper primary cover 26 is removed, the shift fork assembly 40 is removed from the transmission 20 along with the cover 26, which can then be taken to a work bench for repair or service, such as the replacement of the wear pads 49a, 49b or other components. Once the upper primary cover 26 is mounted to the housing 25 and the shift forks 45 engaged with the corresponding synchronizers 33, the proper spacial relationship between the individual shift forks 45 and the corresponding synchronizer can be accurately adjusted by an appropriate manipulation of the adjustment mechanism 50 to locate the base portion 46 of the shift fork 45 along the length of the corresponding shift rail 42, 43 until the synchronizer 33 is properly and accurately positioned.

It should also be noted that the shift rail interlock 44 and the detent mechanism 41 are also removed with and as part of the shift fork assembly 40 for proper servicing on a work bench of the like. One skilled in the art will readily recognize that the normal servicing of small component items such as the detent mechanism 41 while the shift fork assembly 40 is still mounted within the transmission housing 25 can result in the small components being lost within the interior of the transmission 20, which would be inherently damaging to the normal, operation of transmission 20.

## Claims

1. A tractor comprising :
- a chassis (10) supported above the ground by wheels (11, 19), including drive wheels (19) to provide operative power for movement of said chassis (10) over the ground;
- an engine (12) mounted on said chassis (10) to provide operative power; and
- a transmission (20) operatively interconnecting said drive wheels (19) and said engine (12) to provide varying speeds of operation of said drive wheels (19) for a given speed of operation of said engine (12), said transmission (20) having a housing (25) including a removable cover (26) to provide access to the interior of said housing (25), a plurality of gears (31, 36) rotatably supported within said housing (25) and a shift fork assembly (40) mounted within said housing (25) to effect a selectable shifting of said gears (31, 36) for interengagement therebetween in a predefined manner to provide said different speeds of operation of said drive wheels (19) connected thereto; and
characterized in that said shift fork assembly (40) is mounted on said transmission cover (26) to be removable therewith as a unit with said transmission cover (26).

2. A tractor according to claim 1 characterized in that said shift fork assembly (40) includes at least one shift rail (42, 43), a shift fork (45) mounted on said at least on shift rail (42, 43), a position adjustment mechanism (50) interengaged between said shift fork (45) and said shift rail (42, 43) to effect relative positional displacement therebetween for properly aligning said shift fork (45) with a corresponding shift collar (33) associated with at least one of said gears (31, 36) to effect the selected interengagement between said gears (31, 36), and a detent mechanism (41) releasably holding said shift fork (45) in a selected position.

3. A tractor according to claim 2 characterized in that said transmission cover (26) is provided with a secondary cover (27) which is independently removable from said transmission cover (26) to permit access to said shift fork assembly (40) when said shift fork assembly (40) is mounted on said transmission housing (25) to allow the selective manipulation of said position adjustment mechanism (50).

4. A tractor according to claim 2 or 3 characterized in that each said shift fork (45) is mounted on the corresponding said shift rail ((42, 43) to be moveable therewith, each said shift fork (45) being positionally adjustable on the corresponding said rail (42, 43) through manipulation of said position adjustment mechanism (50) to permit a proper alignment between each said shift fork (45) and the corresponding said shift collar (33).

5. A tractor according to claims 2 to 4 characterized in that said position adjustment mechanism (50) includes a pair of set screws (51, 52) threadably received through each said shift fork (45) to be engageable with a corresponding pair of indents (53, 54) in the respective said shift rail (42, 43), said pair of set screws (51, 52) having a spacing different from said corresponding pair of indents (53, 54) such that at least one of said set screws (51, 52) is engageable with a sloped side of the corresponding said indent (53, 54).

6. A transmission comprising :
- a housing (25) defining a hollow shell including at least one opening therein to provide access into the interior of said housing (25), said housing rotatably mounting an input shaft (32) and an output shaft (39);
- a transmission cover (26) removably mounted on said housing (25) to cover said at least one opening;
- a plurality of gears (31, 36) rotatably mounted within said housing (25) and being operatively connected to said input and output shafts (32, 39), at least one of said gears (31, 36) having a shiftable component (33) to permit the selective engagement between selected pairs of said gears (31, 36) to effect differing speeds of rotation of said output shaft (39) for a given speed of rotation of said input shaft (32); and
- a shift fork assembly (40) mounted within said housing (26) to effect a selectable shifting of said shiftable component (33); and
characterized in that said shift fork assembly (40) is mounted to said transmission cover (26) to be removable from said housing (25) as a unit therewith.

7. A transmission according to claim 6 characterized in that said shift fork assembly (40) including at least one shift rail (42, 43), a shift fork (45) mounted on said at least on shift rail (42, 43), a position adjustment mechanism (50) interengaged between said shift fork (45) and said shift rail (42, 43) to effect relative positional displacement therebetween for properly aligning said shift fork (45) with a corresponding shift collar (33) associated with at least one of said gears (31, 36) to effect the selected interengagement between said gears (31, 36), and a detent mechanism (41) releasably holding said shift fork (45) in a selected position.

8. A transmission according to claim 7 characterized in that a secondary cover (27) is removably mounted on said transmission cover (26) to be independently removable from said transmission cover (26) to permit access to said position adjustment mechanism (50) while said shift fork assembly (40) is mounted on said transmission housing (25) to allow the selective manipulation thereof.

9. A transmission according to claims 7 or 8 characterized in that said position adjustment mechanism (50) includes a pair of set screws (51, 52) threadably received through each said shift fork (45) to be engageable with a corresponding pair of indents (53, 54) in the respective said shift rail (42, 43), said pair of set screws (51, 52) having a spacing different from said corresponding pair of indents (53, 54) such that at least one of said set screws (51, 52) is engageable with a sloped side of the corresponding said indent (53, 54).

10. A transmission according to any of the claims 7 to 9 characterized in that said detent mechanism (41) includes a spring-loaded detent apparatus seated in said transmission cover (26) and positioned for engagement with detents formed in the corresponding said shift rail (42, 43).
